# EUROPÄISCHE PATENTSCHRIFT

(11) **EP 1 205 993 B1**
(45) Veröffentlichungstag und Bekanntmachung des Hinweises auf die Patenterteilung: **05.12.2012**
(21) Anmeldenummer: 01810984.3
(22) Anmeldetag: 09.10.2001
(51) Int. Cl.: H01M 8/04

(54) **Verfahren zur Betreiben einer Brennstoffzellenbatterie mit einer Steuerung**
Method for operating a fuel cell battery with a control arrangement
Procédé de fonctionnement d'une batterie de piles à combustible avec un dispositif de contrôle

(30) Priorität: 07.11.2000 EP 00811042
(43) Veröffentlichungstag der Anmeldung: 15.05.2002
(73) Patentinhaber: Hexis AG, 8404 Winterthur (CH)
(72) Erfinder: Rüegge, Andreas, 8408 Winterthur (CH); Gamper, Thomas, 8219 Trasadingen (CH); Holoch, Philip, 8405 Winterthur (CH)
(74) Vertreter: Sulzer Management AG

(56) Entgegenhaltungen:
- EP-A- 0 377 151
- EP-A- 0 780 917
- EP-A- 0 818 840
- DE-A- 4 037 970
- US-A- 6 136 462

## Beschreibung

Die Erfindung betrifft ein Verfahren zum Betreiben einer Brennstoffzellenbatterie mit einer Steuerung. Sie bezieht sich auch auf eine Anlage mit einer Brennstoffzellenbatterie, deren Betrieb nach dem erfindungsgemässen Verfahren gesteuert wird.

Brennstoffzellen, insbesondere Hochtemperatur-Brennstoffzellen des SOFC-Typs ("Solid Oxid Fuel Cell"), wie aus US-A-6 136 462 bekannt, ermöglichen eine Nutzung von Energie eines Brennstoffs durch eine Energieumwandlung. Dabei können sowohl elektrische Energie, die aufgrund elektrochemischer Prozesse erzeugt wird, als auch thermische Energie, die in Form von heissen Abgasen der Prozesse anfällt, genutzt werden. Es werden gasförmige Ströme zweier Edukt getrennt durch die Zellen geführt. Das erste Edukt, das insbesondere Umgebungsluft ist, enthält oxidierende Komponenten, das zweite Edukt reduzierende Komponenten. Mit Vorteil wird als zweites Edukt ein Methan enthaltendes Gas (z. B. Erdgas) verwendet, das vor dem Eintritt in die Zellen durch einen Reformer geführt und dort beispielsweise mittels einer zusätzlichen Einspeisung von Wasser und unter Zufuhr von Prozesswärme in die reduzierenden Komponenten Wasserstoff und Kohlenmonoxid umgewandelt wird. Als Quelle für die im Reformer benötigte Prozesswärme kann mit Vorteil das heisse Abgas verwendet werden. Bei der nachfolgenden Beschreibung wird kein Unterschied zwischen den Strömen eines ursprünglichen Edukts und eines umgewandelten Edukts gemacht. Die Reformierungsprozesse werden in der Regel nicht mehr explizit genannt; sondern es wird stillschweigend vorausgesetzt, dass auch der Einsatz von Reformern vorgesehen ist.

Die Edukte werden gesteuert in die Batterie eingespeist und zwar in einem bedingt vorgegebenen Mengenverhältnis, für das eine Sicherheitsbedingung erfüllt sein muss: im Abgasstrom dürfen keine reduzierenden Komponenten, also keine unverbrannten Komponenten des zweiten Edukts, mehr enthalten sein. Es muss also ein Gas-Sicherheits-System vorgesehen werden, mit dem erreicht wird, dass für die auf die Stöchiometrie bezogene Luftzahl (oder Luftverhältnis) λ gilt, dass λ ≥ 1 ist. Bei Gebläsebrennern werden pneumatische Mischeinrichtungen verwendet, die eine variable Zufuhr der Eduktströme in eine Brennkammer bei konstant bleibendem λ ermöglichen. Solche Einrichtungen arbeiten mit einem Gleichdruckregler oder einem Verhältnisdruckregler. Bei der Entwicklung der Steuerung von Anlagen mit Brennstoffzellen ist die Idee entstanden, die von den Gebläsebrennern her bekannten Mischeinrichtungen in einer geeignet abgewandelten Form bei der zu entwickelnden Steuerung zu verwenden.

Der Bedarf der Verbraucher an elektrischer Energie ist in der Regel nicht konstant, so dass die an die Brennstoffzellenbatterie angelegte Last entsprechend einen fluktuierenden Wechsel aufweist. Solche Lastwechsel haben in den Zellen Temperaturschwankungen zur Folge. Die Reaktionstemperatur muss mittels einer Regelung innerhalb eines Intervalls gehalten werden, in welchem die Temperatur für effiziente Prozesse ausreichend hoch und bezüglich verwendeter Werkstoffe ausreichend tief ist.

Die Eduktströme werden mit Vorteil durch Absaugen des Abgases mittels eines drehzahlgesteuerten Gebläses angetrieben. Die Reaktionstemperatur kann mittels Änderungen der Gebläsedrehzahl geregelt werden. Wenn die genannte pneumatische Einrichtung verwendet werden soll, so ergibt sich ein Problem, das von den Gebläsebrennern her nicht bekannt ist: Bezieht der Verbraucher beispielsweise weniger elektrische Energie, so nimmt bei unveränderten Eduktströmen die Erzeugung von Abwärme entsprechend zu. Wird nun, um überschüssige Wärme aus den Zellen verstärkt abführen zu können, der Luftstrom - der Strom des ersten Edukts - intensiviert, so erhöht sich auch die Zufuhr des zweiten Edukts. Dies hätte aber im Widerspruch zum verringerten Bezug an elektrischer Energie einen verstärkten Umsatz der elektrochemischen Reaktionen zur Folge.

Aufgabe der Erfindung ist es, ein Verfahren zu schaffen, mit dem in einer Anlage mit einer Brennstoffzellenbatterie die genannte pneumatische Einrichtung mit Druckregler - geeignet abgewandelt - einsetzbar ist und bei dem eine Temperaturregelung mit variablem Strom des ersten Edukts (in der Regel Umgebungsluft) möglich ist. Diese Aufgabe wird durch das im Anspruch 1 definierte Verfahren gelöst.

Das Verfahren zum Betreiben einer Brennstoffzellenbatterie umfasst eine Steuerung, durch die elektrochemische Reaktionen in Zellen der Batterie beeinflusst werden. Es werden gasförmige Ströme zweier Edukte in einem bedingt vorgebenen Mengenverhältnis gesteuert in die Batterie eingespeist und getrennt durch die Zellen geführt. Das erste Edukt enthält oxidierende Komponenten, das zweite Edukt reduzierende Komponenten und das erste Edukt ist insbesondere Umgebungsluft. Die Eduktströme werden nach Durchgang durch die Zellen vereinigt und mittels einer Nachverbrennung und unter Erzeugung eines Stroms von Abgas weiter behandelt, so dass bei dem bedingt vorgebenen Mengenverhältnis die reduzierenden Komponenten vollständig oxidiert werden. Der erste Eduktstrom, insbesondere der Luftstrom, ist durch die Steuerung in beschränktem Mass variierbar; er wird zu einer Regelung der Reaktionstemperatur verwendet. Simultan zur Regelung der Reaktionstemperatur wird der zweite Eduktstrom konstant gehalten, nämlich mittels einer zweiten Regelung, die auf einen der Eduktströme vor dem Batterieeingang einwirkt.

Die abhängigen Ansprüche 2 bis 9 betreffen vorteilhafte Ausführungsformen des erfindungsgemässen Verfahrens. Eine Anlage mit Brennstoffzellen, die nach diesem Verfahren betrieben wird, ist Gegenstand des Anspruchs 10.

Die Qualität des Brennstoffs kann variieren, so dass dem Massenstrom des zweiten Edukts nicht in eindeutiger Weise feste Werte für die Anteile der reduzierenden Komponenten zugeordnet werden können. Das erfindungsgemässe Verfahren lässt sich so weiter entwickeln, dass auch Fluktuationen der Brennstoffqualität berücksichtigt werden können. Dazu wird beispielsweise eine λ-Sonde oder ein CO-Sensor eingesetzt, die zur Messung des Restsauerstoffanteils bzw. eines Rests an Kohlenmonoxid CO im Abgasstrom verwendet wird. Änderungen des Restsauerstoffanteils bzw. CO-Rests können als ein Mass für die Qualitätsänderungen angesehen werden. Die Regelung des zweiten Eduktstroms, wie sie im erfindungsgemässen Verfahren vorgesehen ist, kann dann so ergänzt werden, dass auf ein Konstanthalten des Restsauerstoffanteils im Abgasstrom hin geregelt wird.

Die Qualität des zweiten Edukts kann auch durch einen anderen Parameter, beispielsweise durch den Wasserstoffanteil, charakterisierbar sein. Ein Sensor zum Messen dieses charakteristischen Parameters kann im zweiten Eduktstrom angeordnet werden, so dass eine Änderung des charakteristischen Parameters für eine Beeinflussung der zweiten Regelung verwendet werden kann. Damit ist ebenfalls die Durchführung der zweiten Regelung aufgrund einer Qualitätsänderung des zweiten Edukts möglich.

Nachfolgend wird die Erfindung anhand der Zeichnungen erläutert. Es zeigen:
- Fig. 1: eine schematische Darstellung einer Anlage mit Brennstoffzellen, in der das erfindungsgemässe Verfahren angewendet werden soll,
- Fig. 2: eine pneumatische Einrichtung, wie sie bereits für Gebläsebrenner verwendet wird,
- Fig. 3: eine symbolische Darstellung der Einrichtung der Fig. 2,
- Fig. 4: ein Schaltungsschema zu einer Anlage, in der eine erste Ausführungsform des erfindungsgemässen Verfahrens angewendet wird,
- Fig. 5 - 7: jeweils ein Schaltungsschema zu drei weiteren Ausführungsformen und
- Fig. 8: ein Schaltungsschema zu einer Ausführungsform des erfindungsgemässen Verfahrens, bei der auf den ersten Eduktstrom mit einem Stellglied eingewirkt wird.

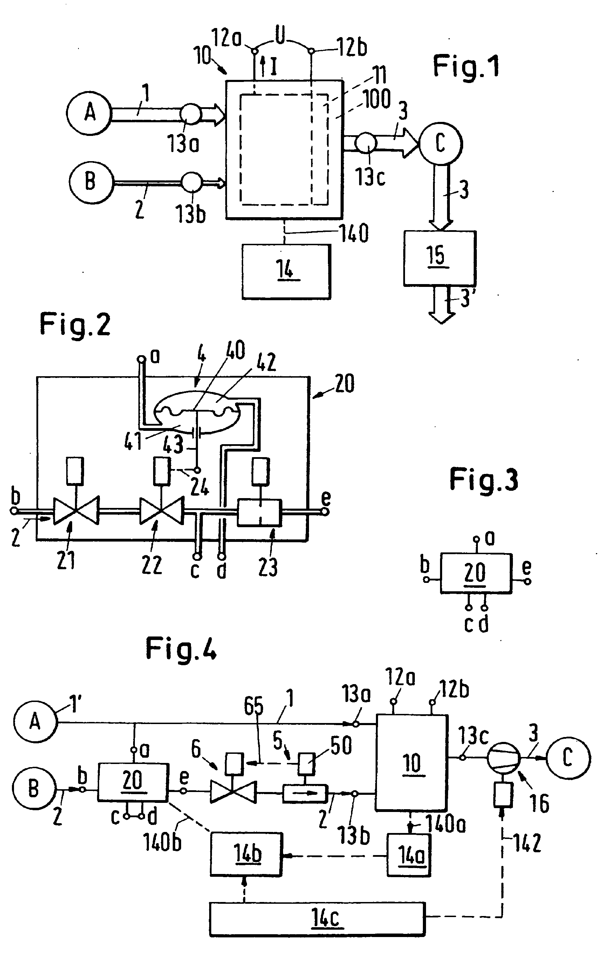

Die schematische Darstellung in Fig. 1 zeigt eine Anlage mit einer Brennstoffzellenbatterie 10, in der - umgeben von einer wärmedämmenden Hülle 100 - ein Stapel von Brennstoffzellen 11 angeordnet ist. In den Zellen 11 erzeugte elektrische Energie kann über Pole 12a und 12b einem nicht dargestellten Verbraucher zugeführt werden. Der elektrische Strom I und die über den Polen 12a und 12b liegende Spannung U hängen von der Anzahl sowie Leistungsfähigkeit der Zellen 11 und der durch den Verbraucher angelegten Last ab. Ein Fluidstrom 1 mit einem gasförmigen Edukt A (in der Regel Umgebungsluft) wird über einen Eingang 13a in die Batterie 10 eingespeist. Ein zweites Edukt B, der Brennstoff 2, tritt über einen Eingang 13b ein, wobei dieses Edukt B in der Regel zuerst in einem nicht dargestellten Reformer in eine reaktionsfähige Form umgewandelt wird. Eine mit der elektrischen Energie (= Uxl) simultan entstehende Abwärme wird in Form eines heissen Abgases C als Abgasstrom 3 durch einen Ausgang 13c aus der Batterie 10 wegtransportiert und durch einen Verbraucher 15 genutzt. Durch den Verbraucher abgekühltes Abgas 3' wird an die Umgebung abgegeben. Das in der Batterie 10 stattfindende Verfahren macht Steuerungen nötig, die mittels einer Einrichtung 14 durchgeführt wird, wobei diese Einrichtung 14 mit Information übermittelnden Verbindungen 140 an die Batterie 10 angeschlossen ist. Bei den nachfolgend beschriebenen Ausführungsformen (siehe Fig. 4) setzt sich die Einrichtung 14 zusammen aus einer Überwachungseinheit 14a, einem Feuerungsautomaten 14b und einer Steuerungseinrichtung 14c, mit der die Gesamtanlage gesteuert und/oder geregelt wird.

Die pneumatische Einrichtung 20 (oder eine elektropneumatische Einrichtung) der Fig. 2 ist Teil einer pneumatischen Gemischregelung, wie sie bereits für Gebläsebrenner verwendet wird. Zentrales Element dieser Einrichtung 20 ist ein Druckregler 4, hier ein Gleichdruckregler, in Form eines Behälters, der durch eine elastisch verschiebbare Membran 40 in zwei Kammern 41 und 42 unterteilt wird. Die Membran 40 ist mit einem steuerbaren Ventil 22 verbunden (Verbindung 43, 24), in dem aufgrund der Bewegung der Membran 40 eine entsprechende durchflussändernde Bewegung erzeugt wird. Bezüglich Zustandsänderungen des Ventils 22 wird eine schliessende von einer öffnenden Seite der Membran 40 unterschieden: wird der Druck auf der öffnenden Seite, nämlich in der Kammer 41, erhöht oder erniedrigt, so öffnet bzw. schliesst das Ventil 22; entsprechendes - nur umgekehrt - gilt für die schliessende Seite der Kammer 42. Die öffnende Seite ist über den Anschluss a ansteuerbar, die schliessende Seite über den Anschluss d. Der zu steuernde Gasstrom 2 wird an einem Eingang b eingespeist; er verlässt die Einrichtung 20 durch einen Ausgang e. Mittels eines Schliessorgans 21 kann der Gasstrom 2 gestoppt werden. (Bei handelsüblichen Einrichtungen 20 sind zwei Schliessorgane 21 hintereinander geschaltet.) Ein gegebenenfalls nötiges Schliesssignal wird durch den Feuerungsautomaten 14b (Fig. 4) über eine Verbindungsleitung 140b abgegeben. Bei der Gemischregelung von Gebläsebrennern ist ein zweiter Anschluss c an den Gasstrom 2 mit dem Anschluss d verbunden. Über den Anschluss a kann ein Gasdruck auf die öffnende Seite, Kammer 41, des Druckreglers 4 einwirken. Stromabwärts nach dem Ventil 22 ist eine einstellbare Blende 23 angeordnet. Mit ihr lässt sich das Verhältnis der beiden Gasströme 1 und 2 verändern und wenn nötig nachjustieren.

Statt eines Gleichdruckreglers 4 kann auch ein Verhältnisdruckregler mit einem konstanten Druckverhältnis verwendet werden. Das Verhältnis zwischen Druck p_{A} des Edukts A und Druck p_{B} des Edukts B ist beispielsweise 2:1 oder 3:1. Im Arbeitsbereich des Druckreglers (beispielsweise 0.4 mbar < p_{B} < 30 mbar / 0.4 mbar < p_{A} < 10 mbar) ist das Druckverhältnis p_{B} : p_{A} unabhängig von p_{A}. Bei einem Gleichdruckregler ist p_{B} = p_{A}.

Fig. 3 zeigt eine symbolische Darstellung der Einrichtung 20 der Fig. 2: Anschlussstellen a und d des Druckreglers 4; Eingang b und Ausgang e für den Gasstrom 2 des Edukts B; Seitenanschluss c des Gasstroms 2 stromabwärts nach dem geregelten Ventil 22.

Das in Fig. 4 gezeigte Schaltungsschema stellt eine Anlage dar, in der eine erste Ausführungsform des erfindungsgemässen Verfahrens angewendet wird. Das Symbol 1' stellt ein Reservoir des Edukts A dar (Reservoirdruck p_{A}), das hier wie auch bei den folgenden Ausführungsbeispielen die Umgebungsluft ist. Die pneumatische Einrichtung 20 ist wie bei bekannten Gebläsebrennern an die Gasströme 1 und 2 angeschlossen: die Anschlussstellen c und d sind miteinander verbunden (d. h. gleicher Druck bei c und d). Die Anschlussstelle a steht in direkter Verbindung mit dem Reservoir 1' des Edukts A; daher ist der auf die öffnende Seite des Druckreglers 4 wirkende Druck im wesentlichen gleich dem Umgebungsdruck. Mit einem drehzahlgesteuerten Gebläse 16, das stromabwärts nach der Batterie 10 angeordnet ist, ergibt sich ein Unterdruck in den Zellen 11 (Saugbetrieb). Je grösser die Förderleistung des Gebläses 16 ist, desto tiefer ist der am Eingang d auf die schliessende Seite des Druckreglers 4 wirkende Druck (= p_{B}) und desto grösser ist somit der Massenstrom 2 des Edukts B.

Mit einem weiteren Organ, nämlich einem Proportionalventil 6, und einem Massenstromsensor 5 lässt sich der zweite Gasstrom 2 in Bezug auf eine Regelung der Reaktionstemperatur in den Zellen 11 beeinflussen. Die Situation ist wie folgt: Aufgrund der Steuerung des Ventils 22 mittels des Druckreglers 4 wird ein konstantes Verhältnis von Reservoirdruck p_{A} zum Druck am Ausgang des Ventils 22 eingestellt (hier 1:1, Gleichdruck). Die Überwachungseinheit 14a empfängt über eine Verbindungsleitung 140a ein Temperatursignal aus der Batterie 10, das eine Information über die Reaktionstemperatur darstellt. Aufgrund dieser Information wird die Drehzahl des Gebläses 16 über die Verbindungsleitung 142 geregelt. Mit einer Änderung der Förderleistung ändert sich auch der Druck in den Zellen 11; entsprechend wird mehr oder weniger der Edukte A und B angesaugt (bei unverändertem Zustand des Proportionalventils 6). Der Massenstrom des Edukts B soll aber unverändert bleiben, damit sich keine Änderung der elektrochemischen Reaktionen ergibt. Dies wird mit dem Massenstromsensor 5 und einem Regler 50 erreicht, die zwischen dem Ausgang e der Einrichtung 20 und dem Eingang 13b der Batterie 10 angeordnet sind. Der Regler 50 wirkt zwecks Konstanthalten der Fördermenge über eine Signalverbindung 65 auf das Proportionalventil 6 ein.

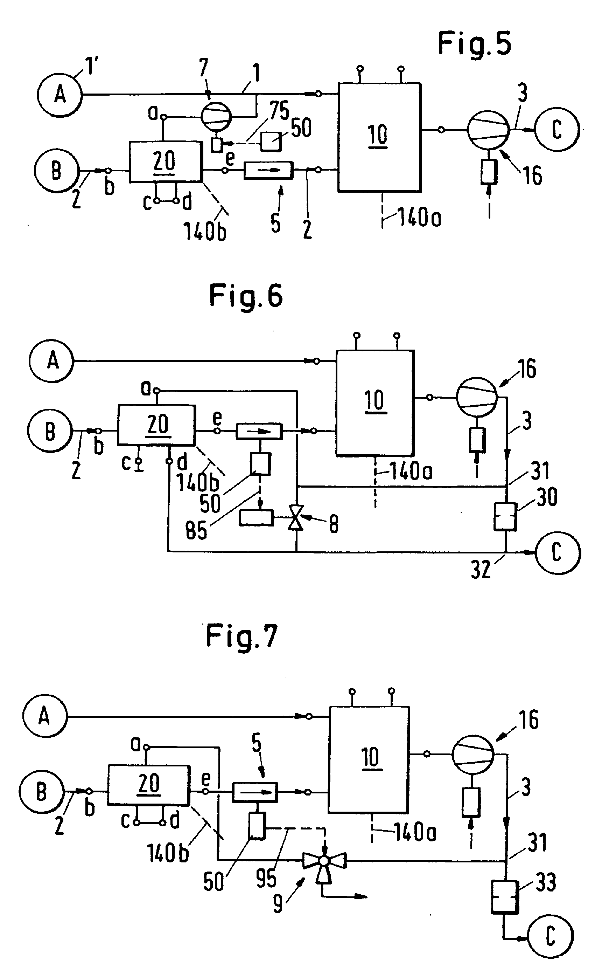

In dem Schaltungsschema eines zweiten Ausführungsbeispiels in Fig. 5 sind die Überwachungseinheit 14a und der Feuerungsautomaten 14b nicht mehr dargestellt, wobei aber die Verbindungen 140a und 140b noch angegeben sind. Dies gilt auch für die beiden folgenden Ausführungsbeispiele der Figuren 6 und 7.

Beim zweiten Beispiel wird mittels des Massenstromsensors 5 und dessen Reglers 50 nicht der Druck am Druckregleranschluss d direkt verändert; sondern eine Druckänderung erfolgt indirekt über den Anschluss a. An diesem Anschluss a ist ein Hilfslüfter 7 angeschlossen, der eine Druckdifferenz gegenüber dem Reservoir 1' (Umgebungsdruck) erzeugt. Die Druckdifferenz wird durch den Regler 50 und über die Signalleitung 75 gesteuert und zwar so gesteuert, dass der Durchfluss des Gasstroms 2 an der Messstelle des Sensors 5 konstant bleibt.

Beim dritten Beispiel, Fig. 6, wird der Druckregler 4 an zwei Stellen 31 und 32 an den Abgasstrom 3 angeschlossen ist, wobei eine Blende 30 oder ein anderes Mittel, das sich zur Erzeugung einer vom Massenstrom abhängigen Durckdifferenz eignet, zwischen den zwei Anschlussstellen 31, 32 des Druckreglers 4 angeordnet ist. Der Seitenanschluss c wird verschlossen. Parallel zu den Anschlussstellen 31, 32 wird ein Ventil 8 geschaltet, mit dem der auf den Druckregler 4 wirkende Gasdifferenzdruck veränderbar ist. Mit dem Regler 50 des Massenstromsensors 5 und über eine Signalleitung 85 lässt sich das Ventil 8 so steuern, dass der Gasstrom 2 konstant bleibt. In dem Ventil 8 werden nur geringe Gasströme durchgelassen, so dass die Verwendung eines Mikro-Proportionalventils vorteilhaft ist. Es kann aber auch ein gewöhnliches Ventil verwendet werden, wenn dieses getaktet betrieben wird. Die Trägheit der Druckreglermembran 40 verhindert ein Schwingen.

Beim vierten Beispiel, Fig. 7, wird die öffnende Seite des Druckreglers 4, Anschluss a, an den Abgasstrom 3 angeschlossen, nämlich an eine Anschlussstelle 31, an der dank einer stromabwärts angeordneten Blende 33 ein erhöhter Druck besteht. Wie beim ersten Beispiel ist die schliessende Seite des Druckreglers 4 an den Ausgang des Ventils 22 angeschlossen (Verbindung c zu d). Der Druck an der Anschlussstellen 31 muss so hoch sein, dass eine Druckdifferenz bezüglich dem Anschluss d resultiert. Ein Ablassventil 9 ist zwischen der Anschlussstelle 31 am Abgasstrom 3 und dem Druckregler 4 angeordnet, mit dem die auf den Druckregler wirkende Durckdifferenz auf analoge Weise wie bei den anderen Beispielen mittels des Massenstromreglers 50 (Signalleitung 95) verändert werden kann.

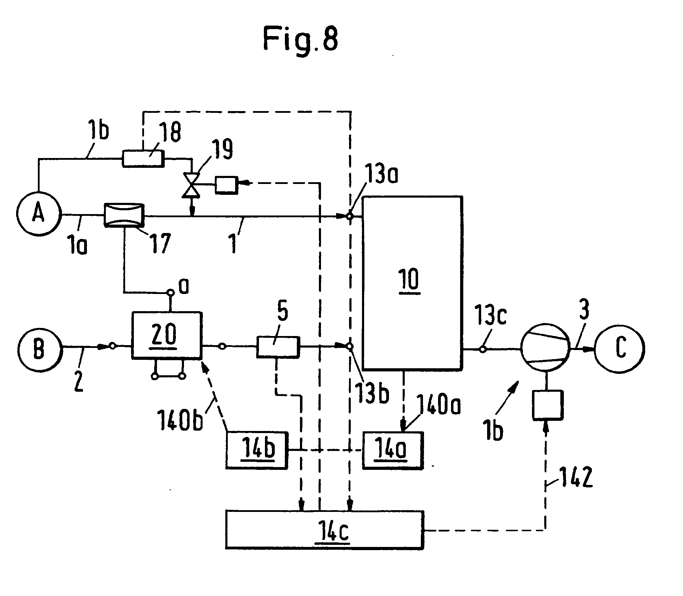

Ein Beispiel zum erfindungsgemässen Verfahren, bei dem statt auf den zweiten auf den ersten Eduktstrom 1 mit einem Stellglied 19 eingewirkt wird, ist in Fig. 8 dargestellt. Das Stellglied 19 kann ein Ventil, eine Regelklappe oder ein Lüfter sein. Der erste Eduktstrom 1 wird vor dem Batterieeingang 13a in zwei Teilen 1a und 1b geführt. Der eine Teil des ersten Eduktstroms 1 wird nachfolgend kurz mit Minimalluftstrom 1a bezeichnet, der andere Teil mit Kühlluftstrom1b. Aufgrund der Einrichtung 20, die den Druckregler 4 enthält, wird der Minimalluftstrom 1a in einem konstanten Mengenverhältnis zum zweiten Eduktstrom 2 dem Batterieeingang 13a zugeführt. Der Kühlluftstrom 1 b des ersten Eduktstroms 1 wird zwecks Regelung der Reaktionstemperatur gesteuert. Das genannte Mengenverhältnis wird mittels dem Druckregler 4 konstant gehalten und zwar so, dass die Luftzahl λ für jeden Kühlluftstrom 1b grösser als eins ist. Im Minimalluftstrom 1a ist ein Element 17 (beispielsweise Venturidüse, Blende, "linear flow element") angeordnet, das einen Führungsdruck erzeugt. Das Element 17 ist mit dem Druckregler 4 verbunden, so dass der Führungsdruck über den Anschluss a den zweiten Eduktstrom 2 beeinflussen kann. Mit einem Massenstromsensor 18 kann der Kühlluftstrom 1b gemessen und ein entsprechendes Signal an die Steuerungseinrichtung 14c übermittelt werden. Mit dem Massenstromsensor 5 im zweiten Eduktstrom 2 wird ein weiteres Signal für die Steuerungseinrichtung 14c erzeugt. Mit Reglern, nämlich direkten Reglern oder Kaskadenreglern, die Komponenten der Steuerungseinrichtung 14c sind, lassen sich die beiden Eduktströme 1 und 2 einstellen. Der Massenstromsensor 18 wird nur für das Kaskadenreglerkonzept benötig. Der Massenstromsensor 5 kann sich alternativ auch im Minimalluftstrom 1a befinden. Aufgrund des kontanten λ-Verhältnisses kann der der zweite Eduktstrom 2 berechnet werden.

Beim Reglerkonzept mit direkten Reglern wird aufgrund der Überwachung der Reaktionstemperatur mit einem ersten Regler das Stellglied 19 angesteuert. Mit einem zweiten Regler, der einen Sollwert für den zweiten Eduktstrom 2 mit einem durch den Massenstromsensor 5 gemessenen Istwert vergleicht, wird das Gebläse 16 angesteuert.

Beim Kaskadenreglerkonzept wird aufgrund der Überwachung der Reaktionstemperatur mit einem ersten Regler ein Sollwert für die Kühlluft 1b bestimmt, der in einem zweiten Regler mit einem durch den Massenstromsensor 18 gemessenen Istwert verglichen wird, wobei ein erstes Ausgangssignal erzeugt wird. Ein zweites Ausgangssignal wird mit einem dritten Regler erzeugt, der einen Sollwert für den zweiten Eduktstrom 2 mit einem durch den Massenstromsensor 5 gemessenen Istwert vergleicht. Aus den beiden Ausgangssignalen werden Steuerungsgrössen für das Gebläse 16 und das Stellglied 19 bestimmt und diese Anlagenkomponenten entsprechend angesteuert. Für die Ansteuerung des Gebläses 16 werden die beiden Ausgangssignale addiert; für die Ansteuerung des Stellglieds 19 wird ein Quotient aus den Ausgangssignalen gebildet.

## Patentansprüche

1. Verfahren zum Betreiben einer Brennstoffzellenbatterie (10) mit einer Steuerung (14), durch die elektrochemische Reaktionen in Zellen (11) der Batterie beeinflusst werden,
in welchem Verfahren gasförmige Ströme (1, 2) zweier Edukte (A, B) in einem bedingt vorgebenen Mengenverhältnis gesteuert in die Batterie eingespeist und getrennt durch die Zellen geführt werden,
das erste Edukt (A) oxidierende Komponenten, das zweite Edukt (B) reduzierende Komponenten enthält und das erste Edukt insbesondere Umgebungsluft ist,
und die Eduktströme (1, 2) nach Durchgang durch die Zellen vereinigt und mittels einer Nachverbrennung und unter Erzeugung eines Stroms (3) von Abgas (C) weiter behandelt werden, so dass bei dem bedingt vorgebenen Mengenverhältnis die reduzierenden Komponenten vollständig oxidiert werden,
wobei der erste Eduktstrom, insbesondere der Luftstrom, durch die Steuerung in beschränktem Mass variierbar ist und zu einer Regelung der Reaktionstemperatur verwendet wird,
und - simultan zur Regelung der Reaktionstemperatur - der zweite Eduktstrom konstant gehalten wird, nämlich mittels einer zweiten Regelung (5, 6; 18), die auf einen der Eduktströme vor dem Batterieeingang (13a, 13b) einwirkt.

2. Verfahren nach Anspruch 1, **dadurch gekennzeichnet, dass** die Eduktströme (1, 2) durch Absaugen des Abgases (C) mittels eines drehzahlgesteuerten Gebläses (16) angetrieben werden und dass die Reaktionstemperatur mittels Änderungen der Gebläsedrehzahl geregelt wird.

3. Verfahren nach Anspruch 1 oder 2, **dadurch gekennzeichnet, dass** der zweite Eduktstrom (2) vor dem Batterieeingang mit einem Ventil (22) und einem weiteren Organ (6; 7; 8; 9) beeinflusst wird, wobei das Ventil durch einen Druckregler (4) gesteuert wird, der an eine Zuführleitung (c) des zweiten Edukts (B) und/oder an einen Abgasstrom (3) angeschlossen ist, und das weitere Organ mittels eines Massenstromsensors (5) sowie eines Reglers (50) gesteuert wird.

4. Verfahren nach Anspruch 3, **dadurch gekennzeichnet, dass** der Druckregler (4) mit einem Reservoir (1') des ersten Edukts (A), insbesondere mit Umgebungsluft, und mit dem zweiten Eduktstrom (2) am Ventilausgang (c) verbunden ist, so dass sich aufgrund der Steuerung des Ventils (22) ein konstantes Verhältnis von Reservoirdruck (p_{A}) zum Druck (p_{B}) am Ventilausgang einstellt, und dass als weiteres Organ ein Proportionalventil (6) verwendet wird, das stromabwärts nach dem Ventil (22) des Druckreglers angeordnet ist.

5. Verfahren nach Anspruch 3, **dadurch gekennzeichnet, dass** der Druckregler (4) mit einem Reservoir (1') des ersten Edukts (A) und mit dem zweiten Eduktstrom (2) am Ventilausgang (c) verbunden ist und dass als weiteres Organ ein Hilfslüfter (7) verwendet wird, der zwischen dem Druckregler und dem Reservoir angeordnet ist.

6. Verfahren nach Anspruch 3, **dadurch gekennzeichnet, dass** der Druckregler (4, a, d) an zwei Stellen (31, 32) an den Abgasstrom (3) angeschlossen ist, dass eine Blende (30) oder ein anderes Mittel zur Erzeugung einer vom Massenstrom abhängigen Durckdifferenz zwischen den zwei Anschlussstellen (a, d oder 31, 32) des Druckreglers angeordnet ist und dass als weiteres Organ ein parallel zum Druckregler angeschlossenes Ventil (8) verwendet wird, mit dem die auf den Druckregler wirkende Durckdifferenz veränderbar ist.

7. Verfahren nach Anspruch 3, **dadurch gekennzeichnet, dass** die öffnende Seite (a) des Druckreglers (4, a, d) an den Abgasstrom (3, 31) und die schliessende Seite (d) an den Ausgang (c) des regelbaren Ventils des zweiten Edukts (B) angeschlossen ist, wobei mittels geeigneter Mittel, insbesondere Blenden (33), eine Druckdifferenz zwischen den beiden Anschlussstellen (a, d) erzeugt wird, und dass als weiteres Organ ein Ablassventil (9) zwischen der Anschlussstelle (31) des Abgasstroms (3) und dem Druckregler (4, a) verwendet wird, mit dem der auf den Druckregler wirkende Gasdifferenzdurck veränderbar ist.

8. Verfahren nach einem der Ansprüche 1 bis 7, **dadurch gekennzeichnet, dass** Mittel zur Durchführung der zweiten Regelung aufgrund einer Qualitätsänderung des zweiten Edukts (B) beeinflussbar sind, dass die Qualität des zweiten Edukts durch einen Parameter charakterisierbar ist, dass ein Sensor zum Messen dieses charakteristischen Parameters im zweiten Eduktstrom (2) oder im Abgasstrom angeordnet ist und dass eine Änderung des charakteristischen Parameters für eine Beeinflussung der zweiten Regelung verwendet wird.

9. Verfahren nach Anspruch 1 oder 2, **dadurch gekennzeichnet, dass** der erste Eduktstrom (1) vor dem Batterieeingang (13a) in zwei Teilen (1a, 1 b) zugeführt wird, der eine Teil (1a) des erste Eduktstroms - insbesondere ein Minimalluftstrom - in einem konstanten Mengenverhältnis zum zweiten Eduktstrom (2) zugeführt wird und der andere Teil (1 b) des ersten Eduktstroms zwecks Regelung der Reaktionstemperatur gesteuert wird, wobei das genannte Mengenverhältnis mittels einem Druckregler (4) konstant gehalten wird und zwar so, dass die Luftzahl λ immer grösser als eins ist.

10. Anlage mit Brennstoffzellenbatterie (10) und einer Steuerung (14) betriebar nach einem der Verfahren der Ansprüche 1 bis 9, **dadurch gekennzeichnet, dass** ein Druckregler (4) und Zuführleitungen für die Edukte (A, B) Teile eines pneumatischen oder elektropneumatischen Verbunds sind, dass der Druckregler einen Behälter mit zwei durch eine Membran (40) unterteilte Kammern (41, 42) umfasst, die Membran mit einem zu steuernden Ventil (22) verbunden ist und der Druckregler ein Gleichdruckregler oder ein Verhältnisdruckregler sein kann.

## Claims

1. A method of operating a fuel cell battery (10) having a control (14) by which electrochemical reactions in cells (11) of the battery are influenced,
in which method gaseous flows (1, 2) of two reactants (A, B) are fed into the battery in a controlled manner at a conditionally predefined quantity ratio and are conducted through the cells separately;
the first reactant (A) contains oxidising components, the second reactant (B) contains reducing components and the first reactant is in particular environmental air;
and the reactant flows (1, 2) are combined after passing through the cells and are further treated by means of afterburning and while producing a flow (3) of exhaust gas (C) so that the reducing components are completely oxidised at the conditionally predefined quantity ratio,
wherein the first reactant flow, in particular the air flow, is variable to a limited degree by the control and is used for regulating the reaction temperature;
and - simultaneously with the regulation of the reaction temperature - the second reactant flow is kept constant, namely by means of a second regulation (5, 6; 18) which acts on one of the reactant flows in front of the battery inlet (13a, 13b).

2. A method in accordance with claim 1, **characterised in that** the reactants flows (1, 2) are driven by extracting the exhaust gas (C) by means of a speed-controlled fan (16); and **in that** the reaction temperature is regulated by means of changes to the fan speed.

3. A method in accordance with claim 1 or claim 2, **characterised in that** the second reactant flow (2) is influenced in front of the battery inlet by a valve (22) and by a further member (6; 7; 8; 9), with the valve being controlled by a pressure regulator (4) which is connected to a feed line (c) of the second reactant (B) and/or to an exhaust gas flow (3) and the further member is controlled by means of a mass flow sensor (5) as well as by means of a regulator (50).

4. A method in accordance with claim 3, **characterised in that** the pressure regulator (4) is connected to a reservoir (1') of the first reactant (A), in particular to environmental air, and at the valve outlet (c) to the second reactant flow (2) so that a constant ratio of reservoir pressure (p_{A}) to the pressure (p_{B}) at the valve outlet is adopted due to the control of the valve (22); and **in that** a proportional valve (6) is used as a further member and is arranged downstream of the valve (22) of the pressure regulator.

5. A method in accordance with claim 3, **characterised in that** the pressure regulator (4) is connected to a reservoir (1') of the first reactant (A) and at the valve outlet (c) to the second reactant flow (2); and **in that** an auxiliary ventilator (7) is used as a further member and is arranged between the pressure regulator and the reservoir.

6. A method in accordance with claim 3, **characterised in that** the pressure regulator (4, a, d) is connected to the exhaust gas flow (3) at two points (31, 32); **in that** a baffle (30) or another means for producing a pressure difference dependant on the mass flow is arranged between the two connector points (a, d or 31, 32) of the pressure regulator; and **in that** a valve (8) connected in parallel to the pressure regulator is used as the further means by which the pressure difference acting on the pressure regulator is variable.

7. A method in accordance with claim 3, **characterised in that** the opening side (a) of the pressure regulator (4, a, d) is connected to the exhaust gas flow (3, 31) and the closing side (d) is connected to the outlet (c) of the regulatable valve of the second reactant (B), with a pressure difference being generated between the two connector points (a, d) by means of suitable means, in particular baffles (33); and **in that** an outlet valve (9) is used between the connector point (31) of the exhaust gas flow (3) and the pressure regulator (4, a) as a further member with which the gas differential pressure acting on the pressure regulator is variable.

8. A method in accordance with any one of the claims 1 to 7, **characterised in that** means for carrying out the second regulation can be influenced by a quality change of the second reactant (B); **in that** the quality of the second reactant can be **characterised by** a parameter; in that a sensor for measuring this characteristic parameter is arranged in the second reactant flow (2) or in the exhaust gas flow; and in that a change of the characteristic parameter is used for an influencing of the second regulation.

9. A method in accordance with claim 1 or claim 2, **characterised in that** the first reactant flow (1) is supplied in two parts (1a, 1b) in front of the battery inlet (13a), the one part (1a) of the first reactant flow - in particular a minimal air flow - being fed to the second reactant flow (2) at a constant quantity ratio and the other part (1b) of the first reactant flow being controlled for the purpose of regulating the reaction temperature, with the named quantity ratio being kept constant by means of a pressure regulator (4), and indeed so that the air number is always greater than one λ.

10. A plant having a fuel cell battery (10) and having a control (14) which is operable in accordance with any one of the claims 1 to 9, **characterised in that** a pressure regulator (4) and feed lines for the reactants (A, B) are parts of a pneumatic or electropneumatic assembly; **in that** the pressure regulator includes a container having two chambers (41, 42) divided by a membrane (40), the membrane is connected to a valve (22) to be controlled and the pressure regulator can be a balanced pressure regulator or a proportional pressure regulator.

## Revendications

1. Procédé de fonctionnement d'une batterie de piles à combustible (10) avec un dispositif de commande (14) par lequel on peut agir sur les réactions électro-chimiques dans des piles (11) de la batterie,
procédé dans lequel des écoulements gazeux (1, 2) de deux éduits (A, B) peuvent être introduits, en un rapport volumétrique restreint prédéfini, d'une manière commandée dans la batterie et peuvent être guidés séparément à travers les piles,
le premier éduit (A) contient des composants oxydants, le deuxième éduit (B) contient des composants réducteurs, et le premier éduit est en particulier l'air environnant,
et les écoulements d'éduits (1, 2), après le passage à travers les piles, sont réunis et sont traités ultérieurement au moyen d'une post-combustion et en produisant un écoulement (3) de gaz brûlé (C) de sorte que, au rapport volumétrique restreint prédéfini, les composants réducteurs sont complètement oxydés,
où le premier écoulement d'éduit, en particulier l'écoulement d'air, peut être amené à varier par la commande selon un degré limité et est utilisé pour une régulation de la température de réaction, et - simultanément à la régulation de la température de réaction - le deuxième écoulement d'éduit est maintenu constant, à savoir au moyen d'une deuxième régulation (5, 6; 18) qui agit sur l' un des écoulements d' éduit en amont de l'entrée de batterie (13a, 13b).

2. Procédé selon la revendication 1, **caractérisé en ce que** les écoulements d'éduits (1, 2) sont entraînés par l'aspiration du gaz brûlé (C) au moyen d'une soufflerie (16) à commande de vitesse de rotation, et **en ce que** la température de réaction est réglée par des modifications de la vitesse de rotation de la soufflerie.

3. Procédé selon la revendication 1 ou 2, **caractérisé en ce qu'**on agit sur le deuxième écoulement d'éduit (2) en amont de l'entrée de batterie avec une vanne (22) et un autre organe (6; 7; 8; 9), la vanne étant commandée par un régulateur de pression (4) qui est relié à un conduit d'amenée (c) du deuxième éduit (B) et/ou à un écoulement de gaz brûlé (3), et l'autre organe est commandé au moyen d'un capteur d'écoulement massique (5) et d'un régulateur (50).

4. Procédé selon la revendication 3, **caractérisé en ce que** le régulateur de pression (4) est relié à un réservoir (1') du premier éduit (A), en particulier à l'air environnant, et au deuxième écoulement d'éduit (2) à la sortie de vanne (c) de sorte qu'en raison de la commande de la vanne (22), un rapport constant de pression de réservoir (p_{A}) à la pression (pₛ) à la sortie de vanne est réglé, et **en ce que**, comme autre organe, une vanne proportionnelle (6) est utilisée qui est disposée en aval à la suite de la vanne (22) du régulateur de pression.

5. Procédé selon la revendication 3, **caractérisé en ce que** le régulateur de pression (4) est relié à un réservoir (1') du premier éduit (A) et au deuxième écoulement d'éduit (2) à la sortie de vanne (c), et **en ce que**, comme autre organe, un aérateur auxiliaire (7) est utilisé qui est disposé entre le régulateur de pression et le réservoir.

6. Procédé selon la revendication 3, **caractérisé en ce que** le régulateur de pression (4 a, d) est connecté à deux emplacements (31, 32) à l'écoulement de gaz brûlé (3), **en ce qu'**un obturateur (30) ou un autre moyen pour produire une différence de pression dépendant de l'écoulement massique est disposé entre les deux emplacements de connection (a, d ou 31, 32) du régulateur de pression, et **en ce que**, comme autre organe, une vanne (8) raccordée au régulateur de pression est utilisée au moyen de laquelle la différence de pression agissant sur le régulateur de pression peut être modifiée.

7. Procédé selon la revendication 3, **caractérisé en ce que** le côté ouvrant (a) du régulateur de pression (4, a, d) est relié à l'écoulement de gaz brûlé (3, 31) et le côté fermant (d) à la sortie (c) de la vanne réglable du deuxième éduit (B), où par des moyens appropriés, en particulier des obturateurs (33), une différence de pression entre les deux emplacements de connection (a, b) est produite, et **en ce que**, comme autre organe, une vanne d'évacuation entre l'emplacement de connection (31) de l'écoulement de gaz brûlé (3) et le régulateur de pression (4, a) est utilisée au moyen de laquelle la pression différentielle du gaz agissant sur le régulateur de pression est modifiable.

8. Procédé selon l'une des revendications 1 à 7, **caractérisé en ce qu'**on peut agir sur des moyens pour l'exécution de la deuxième régulation par une modification de la qualité du deuxième éduit (B), **en ce que** la qualité du deuxième éduit peut être **caractérisée par** un paramètre, en ce qu'un capteur de mesure de ce paramètre caractéristique est disposé dans le deuxième écoulement d'éduit (2) ou dans l'écoulement de gaz brûlé, et en ce qu'une modification du paramètre caractéristique est utilisée pour agir sur la deuxième régulation.

9. Procédé selon la revendication 1 ou 2, **caractérisé en ce que** le premier écoulement d'éduit (1) est amené en amont de l'entrée de batterie (13a) en deux parties (1a, 1b), que la partie (1a) du premier écoulement d'éduit - en particulier un écoulement d'air minimal - est amenée en un rapport volumétrique constant au deuxième écoulement d'éduit (2), et **en ce que** l'autre partie (1b) du premier écoulement d'éduit est commandé pour la régulation de la température de réaction, où le rapport volumétrique indiqué est maintenu constant par un régulateur de pression (4) et cela de façon que le facteur d'air λ soit toujours plus grand que un.

10. Installation avec une batterie de piles à combustible (10) et une commande (14) apte à fonctionner selon l'un des procédés de revendication 1 à 9, **caractérisée en ce qu'**un régulateur de pression (4) et des conduits d'amenée pour les éduits (A, B) sont des parties d'un assemblage pneumatique ou électropneumatique, **en ce que** le régulateur de pression comprend un contenant avec deux enceintes (41, 42) séparées par une membrane (40), **en ce que** la membrane est reliée à la vanne à commander (22) et **en ce que** le régulateur de pression peut être un régulateur à pression égale ou un régulateur de pression proportionnel.
